# EUROPEAN PATENT APPLICATION

(11) **EP 4 742 053 A1**
(43) Date of publication of application: **13.05.2026**
(21) Application number: 24847572.5
(22) Date of filing: 11.03.2024
(51) Int. Cl.: G06F 16/182

(54) **WRITING METHOD FOR DISTRIBUTED FILE SYSTEM, AND ELECTRONIC DEVICE**

(30) Priority: 03.08.2023 CN 202310975556
(71) Applicant: ZTE CORPORATION, Shenzhen, Guangdong 518057 (CN)
(72) Inventor: ZHAO, Sijing, Shenzhen, Guangdong 518057 (CN)
(74) Representative: Canzler & Bergmeier Patentanwälte Partnerschaft mbB
(86) International application number: PCT/CN2024/081028
(87) International publication number: WO 2025/025606

(57) **Abstract**

The present application relates to the technical field of terminals, and discloses a writing method for a distributed file system, and an electronic device. The method is applied to a first electronic device and comprises: acquiring data request information of a target file sent by a second electronic device in communication connection with the first electronic device; determining a target address of first data content on the basis of a request identifier and a linked list array corresponding to the target file; determining a target linked list corresponding to the target address in the linked list array, and under the condition that there is second data content in a memory space of the target linked list, storing the second data content and the first data content into a storage node of the target linked list according to a preset storage rule; and writing data content stored in the linked lists of the linked list array into the target file in parallel.

## Description

### CROSS REFERENCE TO RELATED APPLICATIONS

The present disclosure claims the priority to Chinese Patent Application No. 202310975556.1 entitled "WRITING METHOD FOR DISTRIBUTED FILE SYSTEM, AND ELECTRONIC DEVICE" and filed with the CNIPA on August 3, 2023, entire contents of which are incorporated herein by reference.

### TECHNICAL FIELD

Embodiments of the present disclosure relate to the field of terminal technology, and in particular, to a writing method for a distributed file system and an electronic device.

### BACKGROUND

A situation that a plurality of terminals simultaneously accesses a certain file on a same terminal is usually involved in a multi-screen collaboration scenario. For example, there is an office file in a terminal A, and a terminal B and a terminal C need to write data to the file at the same time, which causes a problem of data access conflict.

At present, in order to avoid the data access conflict, a system default access interception method is generally adopted, that is, when the terminal B accesses the file, the other terminals A and C are prohibited from accessing the file, but with such method, efficiency of collaborative data writing among the plurality of terminals is not high, and user experience is affected.

### SUMMARY

The embodiments of the present disclosure provide a writing method for a distributed file system and an electronic device, so as to solve a problem of data access conflict in a scenario where a plurality of terminals access a same file collaboratively and improve efficiency of collaborative data writing among the plurality of terminals.

In a first aspect, an embodiment of the present disclosure provides a writing method for a distributed file system applied to a first electronic device, including: acquiring data request information for a target file which is sent by a second electronic device communicatively connected to the first electronic device, the data request information includes a request identification and first data content; determining a destination address of the first data content based on the request identification and a linked list array corresponding to the target file; determining a target linked list corresponding to the destination address in the linked list array, and in a case where second data content exists in a memory space of the target linked list, storing the second data content and the first data content in storage nodes of the target linked list based on a preset storage rule, the target linked list includes a plurality of storage nodes that are sequentially stored in the memory space which is continuous; and writing data content stored in each linked list of the linked list array to the target file in parallel, the data content includes the first data content and the second data content.

In a second aspect, an embodiment of the present disclosure provides a writing method for a distributed file system applied to a second electronic device, including: acquiring a request identification corresponding to the second electronic device and first data content corresponding to the write operation instruction of the user for the target file, in response to a write operation instruction initiated by a user for a target file in a first electronic device, the first electronic device and the second electronic device are communicatively connected to each other; and sending data request information for the target file to the first electronic device, the data request information includes the request identification and the first data content.

In a third aspect, an embodiment of the present disclosure provides an electronic device, including a processor and a storage device, wherein the storage device stores a program or an instruction executable on the processor, and when the program or the instruction is executed by the processor, operations in the method described in the first aspect are implemented.

In a fourth aspect, an embodiment of the present disclosure provides a readable storage medium having stored thereon a program or an instruction which, when executed by a processor, implement the operations of the method described in the first aspect.

### BRIEF DESCRIPTION OF DRAWINGS

The drawings here are incorporated into the specification and constitute a part of the specification. The drawings illustrate the embodiments of the present disclosure, and are used to explain, together with the specification, the principle of the present disclosure.
FIG. 1 is a schematic diagram illustrating a possible application scenario according to an embodiment of the present disclosure;
FIG. 2 is a schematic flowchart illustrating a writing method for a distributed file system according to an embodiment of the present disclosure;
FIG. 3 is a schematic diagram of a data structure of a data request packet according to an embodiment of the present disclosure;
FIG. 4 is a schematic diagram of a data storage structure of a linked list array according to an embodiment of the present disclosure;
FIG. 5 is a schematic flowchart illustrating another writing method for a distributed file system according to an embodiment of the present disclosure; and
FIG. 6 is a schematic structural diagram of an electronic device according to an embodiment of the present disclosure.

### DETAIL DESCRIPTION OF EMBODIMENTS

Exemplary embodiments will be described in detail herein, and examples thereof are illustrated by the drawings. In the following descriptions of the drawings, unless otherwise indicated, same numbers in different drawings represent same or similar elements. Implementations described in the following exemplary embodiments do not represent all implementations consistent with the present disclosure. Rather, the implementations described in the following exemplary embodiments are just examples of a device and method which are consistent with some aspects of the present disclosure and described in detail in the appended claims.

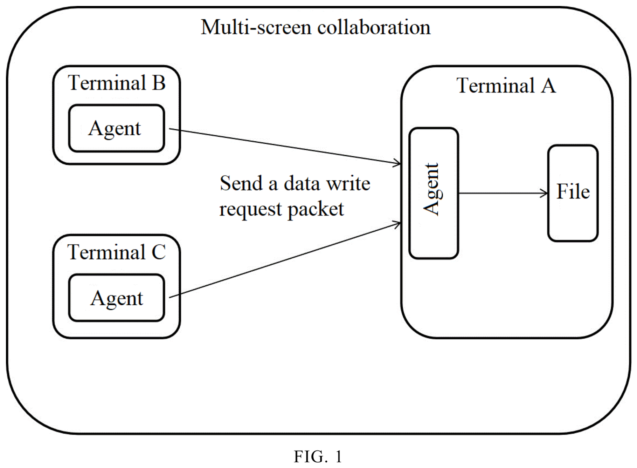

FIG. 1 is a schematic diagram illustrating a possible application scenario according to an embodiment of the present disclosure, and as shown in FIG. 1, in a multi-screen coordination scenario, when a terminal B and a terminal C access a file in a terminal A, an access service may be obtained through an interface provided by an agent program.

Here, the agent program, also called an agent technology, is similar to a middleware technology. In the existing technology, the middleware technology is a type of software program between application software and system software, and is applied to a distributed scenario. The agent technology is an application program running on a multi-screen collaboration terminal, and the application program is embedded in a multi-screen collaboration system running environment, is between the application software and the system software, and a corresponding service is provided for the application software through an interface provided by a system.

In order to avoid a problem of data access conflict caused when a plurality of terminals access a same file simultaneously, the related technology proposes a technical solution in which an agent (a third-party application program) technology may be adopted to process simultaneous reading or writing of a file by a plurality of users. Specifically, a hardware device-based network-attached storage system is introduced, the file accessed by the plurality of users is copied on the hardware device-based network-attached storage system, then copy files are updated to a server in a certain sequence, and the users perform read/write operations by accessing the copy files on the hardware device-based network-attached storage system. This solution increases costs due introduction of a new hardware device. Moreover, a core of this solution lies in using the network-attached storage system to solve the problem of data access conflict, what are actually accessed by the users are the copy files on the network-attached storage system, rather than latest file contents, and write failure of the copy files may be easily caused by updating of the file contents. Therefore, this collaborative access method by introducing the new hardware device is not suitable for the multi-screen collaboration scenario.

In view of above, for the multi-screen collaboration scenario, an embodiment of the present disclosure provides a writing method for a distributed file system, in which before writing data content to a target file based on data request information sent by a second electronic device, a destination address of first data content is determined based on a request identification, a storage node of the first data content is determined based on a storage situation of data content in a target linked list corresponding to the destination address, and then data content stored in each linked list of a linked list array is written to the target file in parallel, so as to solve a problem of data access conflict caused when a plurality of second electronic devices access the target file simultaneously. Compared with the above method of copying the file accessed by the plurality of users by introducing the hardware device-based network-attached storage system, the technical solution provided in the present embodiment can save costs and reduce possibility of data write failure caused by updating of the target file.

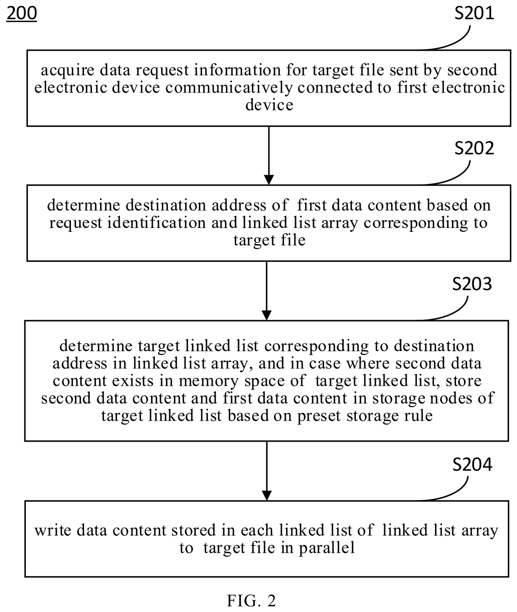

FIG. 2 is a schematic flowchart illustrating a writing method for a distributed file system according to an embodiment of the present disclosure, an execution subject of the method may be a first electronic device, and a second electronic device communicatively connected to the first electronic device performs a data write operation on a target file stored in the first electronic device. As shown in FIG. 2, the method 200 may include following operations S201 to S204.

In the operation S201: data request information for the target file sent by the second electronic device communicatively connected to the first electronic device is acquired, the data request information includes a request identification and first data content.

In the operation S202: a destination address of the first data content is determined based on the request identification and a linked list array corresponding to the target file.

In the operation S203: a target linked list corresponding to the destination address in the linked list array is determined, and in a case where second data content exists in a memory space of the target linked list, the second data content and the first data content are stored in storage nodes of the target linked list based on a preset storage rule, the target linked list includes a plurality of storage nodes that is sequentially stored in the memory space which is continuous.

In the operation S204: data content stored in each linked list of the linked list array is written to the target file in parallel, the data content includes the first data content and the second data content.

Explaination is made in conbination with a specific example. As shown in FIG. 1, in the multi-screen collaboration scenario, a terminal such as a mobile phone, a tablet, or a PC has an operating system capable of running an agent program. The agent program may be embedded into a multi-screen collaboration operating environment in advance, so that data access requests are processed by the agent program in a scenario where a plurality of terminals access a same terminal.

The agent program of the terminal A acquires the data request information for the target file sent by the terminal B or the terminal C, the data request information includes, but is not limited to, the request identification and the first data content, and the request identification is a unique identification of the data request information. The destination address of the first data content is determined based on the request identification and the linked list array corresponding to the target file, the linked list array includes a plurality of linked lists, each linked list has a unique address; and the target linked list corresponding to the destination address may be obtained based on the determined destination address.

Further, in the case where the second data content exists in the memory space of the target linked list, the second data content and the first data content are stored in the storage nodes of the target linked list based on the preset storage rule, and the plurality of storage nodes of the target linked list is sequentially stored in the memory space which is continuous to ensure continuity of the data content. Finally, the data content stored in each linked list of the linked list array is written to the target file in parallel.

It is found by research that a root cause of the data access conflict in the multi-screen collaboration scenario lies in the same address for storing data. Therefore, in the present embodiment, the destination address of the first data content is determined based on the request identification, and then the acquired first data content is connected in a form of a single linked list in a data structure, which can solve the problem of data access conflict caused when a plurality of terminals simultaneously access the target file. Compared with the existing access interception method, the method provided in the embodiment of the present disclosure enables a plurality of second electronic devices to perform write operations on the target file simultaneously while reducing occurrence of the data access conflict, thereby facilitating improvement in efficiency of collaborative data writing among a plurality of terminals.

In an alternative implementation, at the above operation S201, acquiring the data request information for the target file sent by the second electronic device communicatively connected to the first electronic device includes: receiving a data request packet sent by the second electronic device, the data request packet includes protocol data and the data request information; and analyzing the data request packet based on the protocol data to obtain the data request information for the target file.

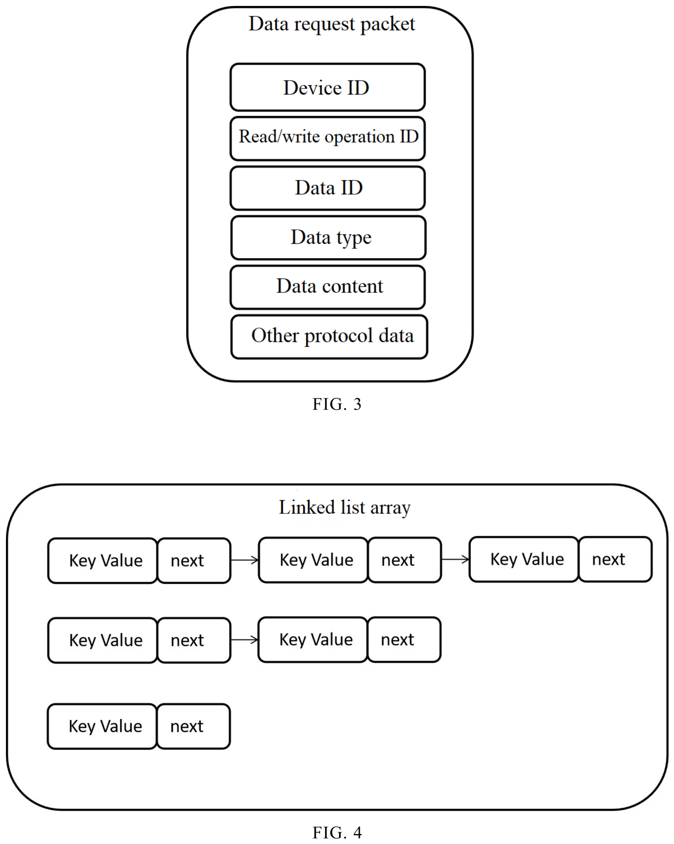

Explaination is made in conbination with a specific example. When a user initiates a write request to a file in the terminal A, an agent program on the terminal B or the terminal C encapsulates the write request into the data request packet. As shown in FIG. 3, the data request packet may include a device identification (device ID), a read/write operation identification (read/write operation ID), a data identification (data ID), a data type, data content, and other protocol data.

The device ID is generally a MAC address of a device and configured to indicate a unique key of a terminal, and data in the data request packet may take the key value as the device ID.

The read/write operation ID is configured to indicate whether the data in the data request packet is for a read operation or a write operation. The read/write operation ID is a write operation ID in the present embodiment.

The data ID is configured to indicate a unique key of the data content. Like the device ID, the data ID is used as a unique value of a plurality of data packets of the terminal.

The data type is configured to indicate a type of data sent by the terminal, and may specifically include a text type, an image type, and a voice type.

The other protocol data includes protocol data for other network communication.

The data request packet may be regarded as an extension packet obtained by extending a packet of the protocol data for network communication by the agent program, and the terminal A receives the data request packet, and analyzes the data request packet based on the protocol data to obtain the data request information for the target file.

Further, at the above operation S202, determining the destination address of the first data content based on the request identification and the linked list array corresponding to the target file includes: determining a key of a hash table based on the device ID and the data ID; and determining the destination address of the first data content based on the key of the hash table and the linked list array corresponding to the target file.

In a specific implementation, an agent program at a receiving end analyzes the received data request packet, combines the device ID and the data ID into the key of the hash table, determines that the data is for the data write operation based on the read/write operation ID, and determines the data is text content based on the data type. Thus, a copy logic for the text content is executed to encapsulate the first data content into data of a key-value form by taking the first data content as a value of the hash table. Further, the destination address of the first data content is determined based on the key of the hash table and the linked list array corresponding to the target file.

The destination address of the first data content may be determined in a following way of acquiring a hash function corresponding to the linked list array; and determining the destination address of the first data content based on the hash function and the key of the hash table.

In a specific implementation, the hash function is, for example, H(k)=K mod N, where K is the key of the hash table, and N is the number of the linked lists in the linked list array; and the destination address of the first data content is determined based on the hash function and the key of the hash table.

In an alternative implementation, at the above operation S203, storing the second data content and the first data content in the storage nodes of the target linked list based on the preset storage rule includes: acquiring a first storage node where the second data content is located; and storing the first data content in a second storage node of the target linked list, with the second storage node being a next storage node immediately adjacent to the first storage node.

In a specific implementation, as shown in FIG. 4, the data encapsulated in the key-value form is taken as an element, the key is a combination of the device ID and the data ID, and the value is the first data content. A key-value is used as an element of a linked list, when one element is added, the key is calculated by the hash function, the target linked list corresponding to the key in the linked list array is determined; if the second data content exists in the memory space of the target linked list, that is, repeated data exists, the element is added in a form of a linked list to a next storage node immediately adjacent to the first storage node where the current repeated data is located. In this way, continuity of the stored data is ensured while avoiding the problem of data access conflict caused when a plurality of second electronic devices access the target file simultaneously.

Further, after determining the target linked list corresponding to the destination address in the linked list array , and before writing the data content stored in each linked list of the linked list array to the target file in parallel, the method further includes: in a case where the second data content does not exist in the memory space of the target linked list, storing the first data content in the memory space.

In a specific implementation, if the second data content does not exist in the memory space of the target linked list, that is, no repeated data exists, the first data content is directly stored in the memory space of the target linked list.

Finally, each linked list of the linked list array is traversed, and the data content stored in all the linked lists is extracted and written to the target file in parallel.

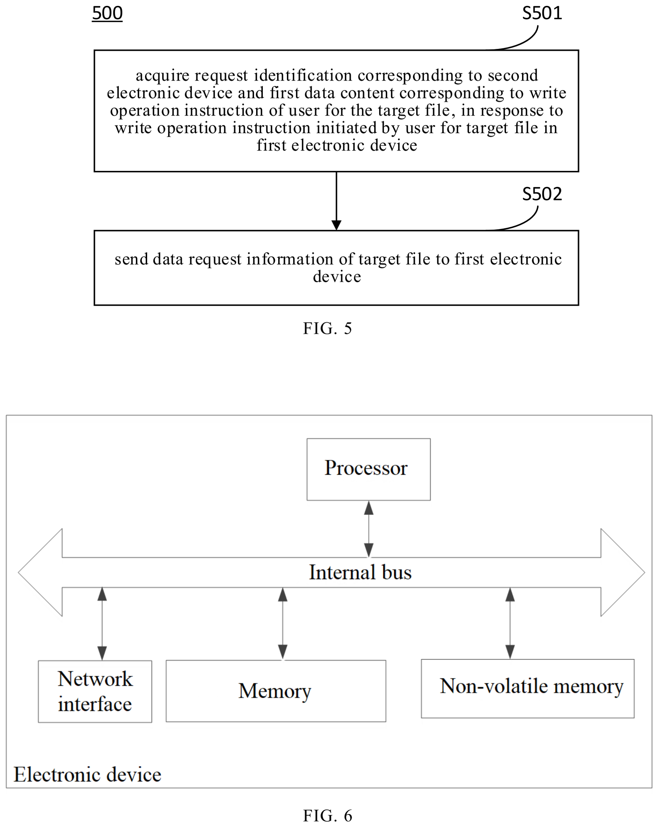

FIG. 5 is a schematic flowchart illustrating another writing method for a distributed file system according to an embodiment of the present disclosure, an execution subject of the method may be a second electronic device, and as shown in FIG. 5, the method 500 may include following operations S501 and S502.

In the operation S501: the request identification corresponding to the second electronic device and the first data content corresponding to the write operation instruction of the user for the target file are acquired, in response to a write operation instruction initiated by a user for the target file in the first electronic device, the first electronic device and the second electronic device are communicatively connected to each other.

In the operation S502: the data request information for the target file is sent to the first electronic device.

The data request information includes the request identification (such as the device identification or the data identification), the read/write operation identification, the data type, and the first data content. The device identification (device ID) is generally a MAC address of a device and configured to indicate a unique key of a transmitting terminal. The data identification (data ID) is configured to indicate a unique key of the data content, and like the device ID, the data ID is used as a unique value of a plurality of data packets of the second electronic device. The read/write operation identification (read/write operation ID) is configured to indicate whether the data in the data request packet is for a read operation or a write operation, and the read/write operation ID is a write operation ID in the present embodiment; and the data type is configured to indicate a type of data sent by the second electronic device, and may include a text type, an image type, and a voice type.

In a specific implementation, the second electronic device, in response to the write operation instruction initiated by the user for the target file in the first electronic device, acquires the request identification corresponding to the second electronic device and the first data content corresponding to the write operation instruction of the user for the target file, and sends the request identification and the first data content to the first electronic device, so as to enable the first electronic device to perform the data write operation on the target file based on the write operation instruction.

In an alternative implementation, at the above operation S502, sending the data request information for the target file to the first electronic device includes: encapsulating the data request information into the data request packet based on the protocol data for preset network communication, and sending the data request packet to the first electronic device, the data request packet includes the protocol data and the data request information.

In a specific implementation, the data request information may be encapsulated into the data request packet based on the protocol data for preset network communication, and the data request packet may be sent to the first electronic device. The data request packet may be regarded as the extension packet obtained by extending the packet of the protocol data for network communication by the agent program, and the first electronic device receives the data request packet, and analyzes the data request packet based on the protocol data to obtain the data request information for the target file.

Explaination is made in conbination with a specific example. Assuming that the target file is an excel file, in the multi-screen collaboration scenario, when the terminal B and the terminal C need to perform write operations on the excel file in the terminal A, agent programs on the terminal B and the terminal C firstly encapsulate write requests of the terminal B and the terminal C into data request packets, each data request packet includes a device ID which is an MAC address of a transmitting device, a write operation ID, a data ID generated by a random algorithm, a data type indicating an excel text, specific data content, and other network protocol data.

After receiving the data request packets sent by the terminal B and the terminal C, the agent program of the terminal A analyzes each data request packet, combines the device ID and the data ID as the key of the element of the hash table of a subsequent link address, acquires the read/write operation ID indicating the write operation, acquires the data type indicating the excel text, and copies the data content of the excel text to serve as the value of the hash table.

An address value of the hash table is obtained by the hash function, if no element exists at this address, the data content is directly stored at the address; if an element exists at the address, the data content is linked to the end of the repeated element in the form of a linked list to form a single linked list. After all the analyzed data request packets are processed in this way, N single linked lists may be obtained.

Finally, each single linked list in the linked list array is traversed, elements stored in the linked lists are extracted to obtain the values, i.e., the data content, in the linked lists, and then the data content is written to the excel file. The hash table may be continuously and repeatedly traversed, and if no element exists, a skipping operation is performed; if an element exists, traversing the single linked lists is performed.

The embodiment of the present disclosure provides the writing method for a distributed file system, in which before writing the data content to the target file based on the data request information sent by the second electronic device, the destination address of the first data content is determined based on the request identification, the storage node of the first data content is determined based on the storage situation of the data content in the target linked list corresponding to the destination address, and then the data content stored in each linked list of the linked list array is written to the target file in parallel, so as to solve the problem of data access conflict caused when a plurality of second electronic devices access the target file simultaneously. Compared with the existing access interception method, the method provided in the embodiment of the present disclosure enables the plurality of second electronic devices to perform write operations on the target file simultaneously while reducing the occurrence of the data access conflict, thereby facilitating improvement in efficiency of collaborative data writing among a plurality of terminals.

FIG. 6 is a schematic diagram of a hardware structure implementing an electronic device according to an embodiment of the present disclosure. Referring to FIG. 6, at a hardware level, the electronic device includes a processor, and optionally includes an internal bus, a network interface, and a storage device. The storage device may include a memory such as a high-speed Random-Access Memory (RAM), and may further include a non-volatile memory such as at least one disk storage device. Apparently, the electronic device may further include hardware desired by other services.

The processor, the network interface, and the storage device may be interconnected through the internal bus, which may be an Industry Standard Architecture (ISA) bus, a Peripheral Component Interconnect (PCI) bus, or an Extended ISA (EISA) bus. The bus may be classified into an address bus, a data bus, a control bus, etc. For ease of illustration, the internal bus is represented by merely one double-headed arrow in FIG. 6, but the merely one double-headed arrow does not represent that merely one bus or merely one type of bus is provided.

The storage device stores a program. Specifically, the program may include program codes including computer operation instructions. The storage device may include the memory and the non-volatile memory, and provide instructions and data for the processor.

The processor reads a corresponding computer program from the non-volatile memory to the memory and runs the computer program to form a device for a target user at a logic level. The processor executes the program stored in the storage device, and specifically performs the method disclosed in the embodiment illustrated by FIG. 2 or the method disclosed in the embodiment illustrated by FIG. 5, and achieves the functions and beneficial effects of each method described in the above method embodiments, which will not be described here.

The method disclosed in the embodiment illustrated by FIG. 2 or the method disclosed in the embodiment illustrated by FIG. 5 in the present disclosure may be implemented in the processor or by the processor. The processor may be an integrated circuit chip having a signal processing capability. In an implementation process, each operation in the above methods may be performed with a hardware-based integrated logic circuit in the processor or with software-based instructions in the processor. The processor may be a general purpose processor including a Central Processing Unit (CPU) and a Network Processor (NP); and the processor may also be a Digital Signal Processors (DSPs), an Application Specific Integrated Circuit (ASIC), a Field-Programmable Gate Array (FPGA) or other programmable logic devices, a discrete gate or a transistor logic device, or a discrete hardware component. All the methods, operations, and logic blocks disclosed in the embodiments of the present disclosure may be implemented or performed. The general purpose processor may be a microprocessor or any conventional processor. The operations in the methods disclosed in the embodiments of the present disclosure may be directly performed with a hardware decoding processor or may be performed by a combination of hardware and software modules in the decoding processor. The software module may be located in a mature storage medium in the art, such as an RAM, a flash memory, a Read-Only Memory (ROM), a Programmable Read-Only Memory (PROM) or an Electrically Erasable Programmable Read-Only Memory (EEPROM), or a register. The storage medium is located in the storage device, and the processor reads information from the storage device, and performs the operations in the above methods together with the hardware of the processor.

The computer device may further perform each method described in the above method embodiments, and achieves the functions and beneficial effects of each method described in the above method embodiments, which will not be described here.

Apparently, in addition to being implemented by software, the electronic device provided in the present disclosure may be implemented in other ways, such as by a logic device or by a combination of software and hardware. That is, an execution subject of the following processing flow is not limited to each logic unit, and may also be hardware or a logic device.

An embodiment of the present disclosure further provides a computer-readable storage medium storing one or more programs which, when executed by an electronic device including a plurality of application programs, cause the electronic device to perform the method disclosed in the embodiment illustrated by FIG. 2 or the method disclosed in the embodiment illustrated by FIG. 5 and achieve the functions and beneficial effects of each method described in the above method embodiments, which will not be described here.

The computer-readable storage medium includes an ROM, an (RAM, a magnetic disk, or an optical disc.

Further, an embodiment of the present disclosure further provides a computer program product, including a computer program stored in a non-transitory computer-readable storage medium, and the computer program includes program instructions. When the program instructions are executed by a computer, the method disclosed in the embodiment illustrated by FIG. 2 or the method disclosed in the embodiment illustrated by FIG. 5 is performed, and the functions and beneficial effects of each method describe d in the above method embodiments are achieved, which will not be described here.

The embodiments of the present disclosure are applicable to various collaboration or interconnection scenarios of electronic devices, which include: collaboration and interconnection between a mobile phone and a notebook computer/tablet computer; collaboration and interconnection between a mobile terminal and a smart television/display; collaboration and interconnection between a mobile phone or a tablet computer and an in-vehicle entertainment system; and collaboration and interconnection between a mobile terminal and a smart conference system. Thus, diverse requirements of users in scenarios smart home, smart office, and smart travel are met.

In summary, what is described above is just the preferable embodiments of the present disclosure, and is not intended to limit the scope of the present disclosure. Any modification, equivalent replacement and improvement made within the spirit and the principle of the present disclosure should be included in the scope of the present disclosure.

The systems, devices, modules or units described in the above embodiments may be specifically implemented by a computer chip or an entity, or implemented by a product with a certain function. One typical implementation device is a computer. Specifically, the computer may be, for example, a personal computer, a laptop computer, a cellular telephone, a camera phone, a smartphone, a personal digital assistant, a media player, a navigation device, an email device, a game console, a tablet computer, a wearable device, or a combination of any of the above devices.

The computer-readable media include permanent/non-permanent media and removable/non-removable media, and can achieve information storage with any method or technique. The information may be computer-readable instructions, data structures, modules of a program, or other data. Examples of a storage medium of a computer include, but are not limited to, a Phase-change Random Access Memory (PRAM), a Static Random Access Memory (SRAM), a Dynamic Random Access Memory (DRAM), other types of RAMs, an ROM, an EEPROM, a flash memory or other memory technology, a Compact Disc Read Only Memory (CD-ROM), a Digital Versatile Disk (DVD) or other optical memories, a magnetic cassette, a magnetic tape, a magnetic disk or other magnetic storage devices, or any other non-transmission medium, which can store information accessible by a computing device. As defined herein, the computer-readable media do not include transitory media such as a modulated data signal and a carrier wave.

It should be further noted that the terms "include", "comprise" or any other variation thereof are intended to indicate a non-exclusive inclusion, so that a process, method, article, or device, which includes a series of elements, does not only include those listed elements but also include other elements which are not explicitly listed, or the elements inherent in such process, method, article, or device. If there are no more limitations, limiting an element by "including a..." does not exclude the existence of other identical elements in the process, method, article, or device which includes the element.

Each embodiment in the present description is described in a progressive manner, reference may be made to each other for the same or similar contents of the embodiments, and each embodiment focuses on the differences from the other embodiments. In particular, for the system embodiments, since the system embodiments are substantially similar to the method embodiments, the system embodiments are described relatively simply, and reference may be made to part of the description of the method embodiments for relevant contents.

## Claims

1. A writing method for a distributed file system applied to a first electronic device, comprising:
Acquiring data request information for a target file sent by a second electronic device communicatively connected to the first electronic device, the data request information comprises a request identification and first data content;
determining a destination address of the first data content based on the request identification and a linked list array corresponding to the target file;
determining a target linked list corresponding to the destination address in the linked list array, and in a case where second data content exists in a memory space of the target linked list, storing the second data content and the first data content in storage nodes of the target linked list based on a preset storage rule, the target linked list comprises a plurality of storage nodes that are sequentially stored in the memory space which is continuous; and
writing data content stored in each linked list of the linked list array to the target file in parallel, the data content comprises the first data content and the second data content.

2. The method of claim 1, wherein acquiring the data request information for the target file sent by the second electronic device communicatively connected to the first electronic device comprises:
receiving a data request packet sent by the second electronic device, the data request packet comprises protocol data and the data request information; and
analyzing the data request packet based on the protocol data to obtain the data request information of the target file.

3. The method of claim 1, wherein the request identification comprises a device identification and a data identification, and
determining the destination address of the first data content based on the request identification and the linked list array corresponding to the target file comprises:
determining a key of a hash table based on the device identification and the data identification; and
determining the destination address of the first data content based on the key of the hash table and the linked list array corresponding to the target file.

4. The method of claim 3, wherein determining the destination address of the first data content based on the key of the hash table and the linked list array corresponding to the target file comprises:
acquiring a hash function corresponding to the linked list array; and
determining the destination address of the first data content based on the hash function and the key of the hash table.

5. The method of claim 1, wherein storing the second data content and the first data content in the storage nodes of the target linked list based on the preset storage rule comprises:
acquiring a first storage node where the second data content is located; and
storing the first data content on a second storage node of the target linked list, the second storage node is a next storage node immediately adjacent to the first storage node.

6. The method of any one of claims 1 to 5, wherein after determining the target linked list corresponding to the destination address in the linked list array, and before writing the data content stored in each linked list of the linked list array to the target file in parallel, the method further comprises:
in a case where the second data content does not exist in the memory space of the target linked list, storing the first data content in the memory space.

7. A writing method for a distributed file system applied to a second electronic device, comprising:
acquiring a request identification corresponding to the second electronic device and first data content corresponding to the write operation instruction of the user for the target file, in response to a write operation instruction initiated by a user for a target file in a first electronic device, the first electronic device and the second electronic device are communicatively connected to each other; and
sending data request information for the target file to the first electronic device, the data request information comprises the request identification and the first data content.

8. The method of claim 7, wherein sending the data request information of the target file to the first electronic device comprises:
encapsulating the data request information into a data request packet based on protocol data for preset network communication; and
sending the data request packet to the first electronic device, the data request packet comprises the protocol data and the data request information.

9. An electronic device, comprising a display screen, a processor, and a storage device, wherein the storage device stores a program or an instruction executable on the processor, and when the program or the instruction is executed by the processor, the method of any one of claims 1 to 8 is implemented.

10. A readable storage medium having stored therein a program or an instruction, wherein the program or the instruction runs on an electronic device, and when the program or the instruction is executed by a processor, the method of any one of claims 1 to 8 is implemented.
